# EUROPEAN PATENT SPECIFICATION

(11) **EP 2 519 795 B1**
(45) Date of publication and mention of the grant of the patent: **08.08.2018**
(21) Application number: 10790849.3
(22) Date of filing: 16.12.2010
(51) Int. Cl.: A23B 7/015, F25D 27/00, F25D 17/04

(54) **A REFRIGERATOR COMPRISING AN ILLUMINATED VEGETABLE COMPARTMENT**
KÜHLSCHRANK MIT BELEUCHTETEM GEMÜSEFACH
RÉFRIGÉRATEUR COMPORTANT UN BAC À LÉGUMES ÉCLAIRÉ

(30) Priority: 30.12.2009 TR 200909992
(43) Date of publication of application: 07.11.2012
(73) Proprietor: Arçelik Anonim Sirketi, 34950 Istanbul (TR)
(72) Inventor: KALYONCU, Hasan, Basar, 34950 Istanbul (TR); ARISOY, Emre, 34950 Istanbul (TR); OTURAK, Mehmet, 34950 Istanbul (TR); AKBORU, Onur, 34950 Istanbul (TR); DOGRUYOL, Tevfik, Fikret, 34950 Istanbul (TR)
(86) International application number: PCT/EP2010/069942
(87) International publication number: WO 2011/080106

(56) References cited:
- EP-A1- 1 431 689
- DE-U1-202007 007 064
- JP-A- 2005 065 622
- US-A- 6 150 774
- US-A1- 2004 245 946
- US-A1- 2005 285 547

## Description

The present invention relates to a refrigerator comprising more than one vegetable compartment which is illuminated for keeping the foods therein fresh for a longer time.

Foodstuffs such as vegetables and fruits stored in refrigerators for a long period of time are observed to start losing their freshness in the course of time. The researches conducted have shown that some foods that are exposed to light, particularly blue, orange and green colored lights of certain wavelengths, not only have a prolonged storage life, but also the vitamin values thereof are increased and the colors thereof are preserved. It is observed that the vegetables and fruits of different types and colors stay fresh for a longer time period under light with different wavelength. For this purpose, in refrigerators comprising more than one vegetable compartment, a light source is emplaced in each vegetable compartment providing the light source to emit light so as to scan a certain range of the light source color spectrum. A different color is observed in each vegetable compartment since the light sources in the different vegetable compartments have microprocessors with different characteristics like oscillator frequency etc. Furthermore, since the compartments have transparent colors and don't have insulation in terms of color permeability, the color formed in each compartment interacts with the colors formed in other compartments. These color migrations are not limited with the vegetable compartments, a different color is observed inside the refrigerator at every moment. In this situation, neither the light wave of the light applied to the fruits and vegetables can be kept under control, nor a pleasing appearance is formed visually.

In the state of the art Japanese Patent Application No. JP2005065622, a refrigerator is explained, comprising an irradiation board having red, blue and green LEDs. These LEDs are turned on in suitable combinations to form the light in the wavelength required for each vegetable group.

The aim of the present invention is the realization of a refrigerator wherein the illumination units placed in different compartments are provided to emit light in the same wavelength simultaneously.

The refrigerator realized in order to attain the aim of the present invention, explicated in the first claim and the respective claims thereof, comprises a synchronization unit that provides more than one illumination unit that illuminate different one from another compartments to emit the same color light simultaneously. The illumination unit comprises a LED having three ends that can emit light in red, blue and green colors. The illumination unit is provided to emit light such that a certain range of the light spectrum is scanned by applying PWM signals having different duty cycles to the ends of the LED. The PWM signal duty cycles applied to the ends of the LED is continuously changed by the microprocessor of the illumination unit. The PWM signal duty cycles applied to different one from another illumination units are provided to be instantaneously synchronous by means of the synchronization unit. Thus, all of the illumination units are provided to emit light of the same color simultaneously. On the other end, since the operating range of the PWM signal duty cycles applied to the illumination units is changed continuously, the fruits and vegetables in the compartment remain fresh for a longer time period by being exposed to light having different wavelength.

In an embodiment of the present invention, the synchronization unit counts the zero points of the mains frequency for more than one different one from another illumination units that are fed by the same mains frequency and when the number of zero points determined by the producer are counted, controls the PWM signal duty cycle of each illumination unit. If the duty cycles of the illumination units are not equal to the duty cycle predetermined by the producer, then the synchronization unit updates the duty cycles so as to be equal to the duty cycle predetermined by the producer. In another embodiment of the present invention, the synchronization unit comprises a communication line that provides the instantaneous PWM signal duty cycle relating to an illumination unit to be transmitted to another illumination unit in the frequency ranges predetermined by the producer. The synchronization unit updates the PWM signal duty cycle of the other illumination unit with respect to the PWM signal duty cycle of the illumination unit transmitted by means of the communication line.

By means of the refrigerator of the present invention, both the fruits and vegetables in the compartment are provided to be exposed to light having different wave lengths such that a certain range of the light spectrum is included and also the illumination units placed in different one from another compartments to emit the same color light simultaneously. Consequently, both the fruits and vegetables in the compartment are provided to remain fresh for a longer time and also a more esthetic appearance in the body is attained by providing the user to view the same color light inside the compartments and the body when the refrigerator door is opened.

A refrigerator realized in order to attain the aim of the present invention is illustrated in the attached figures, where:
Figure 1 - is the schematic view of a refrigerator.
Figure 2 - is the schematic view of the illumination units and some portion of the body relating to an embodiment of the present invention.
Figure 3 - is the view of AA cross section in Figure 2.

The elements illustrated in the figures are numbered as follows:
1. Refrigerator
2. Body
3. Compartment
4. Illumination unit
5. Synchronization unit
6. Communication line

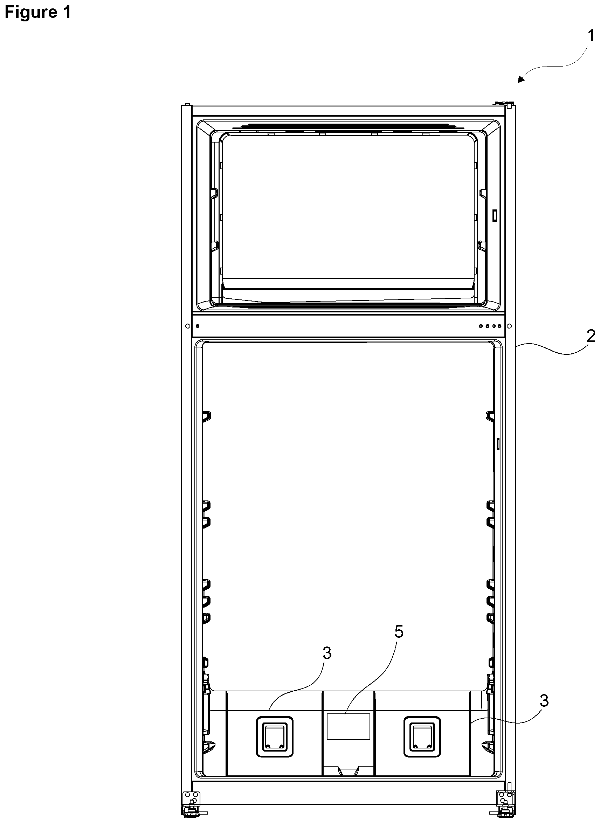

The refrigerator (1) of the present invention comprises a body (2), more than one compartment (3) disposed inside the body (2) wherein fruits and vegetables are placed and more than one illumination unit (4) illuminating the inside of the compartment (3), having a power source and at least one LED having three separate ends that can emit light in three different colors being red, green and blue when fed by the power source and a microprocessor that provides the light having continuously changing wavelength to be emitted by controlling the application of PWM signal having different duty cycles to the ends of the LED such that a certain range of the light spectrum is scanned (Figure 1, Figure 2 and Figure 3).

The refrigerator (1) furthermore comprises a synchronization unit (5) that provides the illumination units (4) illuminating the different compartments (3) to emit light in the same wavelength simultaneously (Figure 1). Accordingly, an identically colored radiation is provided in different one from another compartments (3). While the fruits and vegetables in the compartment (3) are provided to remain fresh for a longer time by being exposed to light scanning a certain range of the light spectrum, a more esthetic appearance is attained in the body (2) by observing the same color light simultaneously in all the compartments (3).

Each illumination unit (4) has an RGB LED. Three different ends are provided on the LED that emit light in red, green and blue colors respectively. When energy is supplied to any one end of the LED, light in that color is obtained. When energy is supplied to any two or to all three of the ends, the colors that are the mixture of the said two colors or three colors are obtained. Light is delivered to the ends of the LED such that a certain range of the color spectrum is scanned. Therefore, pulses are applied to the ends of the LED in the frequency range that cannot be detected by the human eye. Accordingly, by continuously changing the pulses applied to the ends, the light emitted into the compartment (3) is provided to be changed continuously. Applying pulses to the ends of the LED is realized by the PWM (Pulse Width Modulation) technique. Three different PWM signals having three different duty cycles are applied to the red, blue and green ends of the RGB LED such that the total of the PWM signal duty cycle is 100%. By means of the microprocessor that the illumination unit (4) has, by continuously changing the duty cycles of the PWM signal applied to the ends of the LED, a radiation is attained wherein the color transitions are soft and the color observed by the user is changed continuously.

PWM signal having the same duty cycle is applied simultaneously to the ends of the LEDs included in the illumination units (4) that illuminate different one from another compartments (3) by means of the synchronization unit (5). Thus, the fruits and vegetables in each compartment (3) are provided to be exposed to the light in a certain range of the light spectrum and the illumination units (4) in different one from another compartments (3) are provided to emit the same color light simultaneously. Accordingly, a more esthetic appearance is attained by providing the user to observe the same color light in all the compartments (3) simultaneously.

In an embodiment of the present invention, the refrigerator (1) comprises the synchronization unit (5) that controls the PWM signal duty cycle of each illumination unit (4) when the number of zero points counted by the microprocessors of more than one different one from another illumination unit (4) that is fed with the same mains voltage in sinusoidal wave form is equal to the number of zero points predetermined by the producer and updates the PWM signal duty cycles so as to be equal to the PWM signal duty cycle predetermined by the producer when these duty cycles are not equal to the duty cycle predetermined by the producer.

The illumination units (4) disposed in different one from another compartments (3) are fed by the same mains voltage. The frequency of the mains voltage (fs) is a constant value in each country. For example, the mains frequency (fs) is measured as 60 Hz in some countries and as 50 Hz in some other countries. The mains voltage is in the form of sinusoidal wave and passes from the 0 point at every 1/fs period. When energy is supplied to the refrigerator (1) all of the illumination units (4) start to radiate simultaneously. The microprocessor possessed by each illumination unit (4) counts the zero points of the mains voltage. The zero points counted by the microprocessors of all the illumination units (4) is in equal number since the illumination units (4) disposed in different one from another compartments (3) are energized simultaneously and are fed from the same mains voltage. When the number of zero points counted by the different one from another illumination units (4) reaches the number predetermined by the producer, the synchronization unit (5) controls the duty cycle of the PWM signal applied to each illumination unit (4). If these duty cycles are equal to the duty cycles predetermined by the producer, the synchronization unit (5) concludes that all of the illumination units (4) emit the same color light. When the zero points of the mains voltage counted by the illumination units (4) become equal, if the duty cycle of the PWM signal applied to the illumination units (4) is not equal to the duty cycle predetermined by the producer the synchronization unit (5) updates these duty cycles so as to be equal to the duty cycles predetermined by the producer. Consequently, the different illumination units (4) are provided to emit the same color light simultaneously. Accordingly, the different illumination units (4) are provided to emit synchronized light by embedding the software in the microprocessor created by utilizing the data that the mains voltage frequency is constant and starting out from this data.

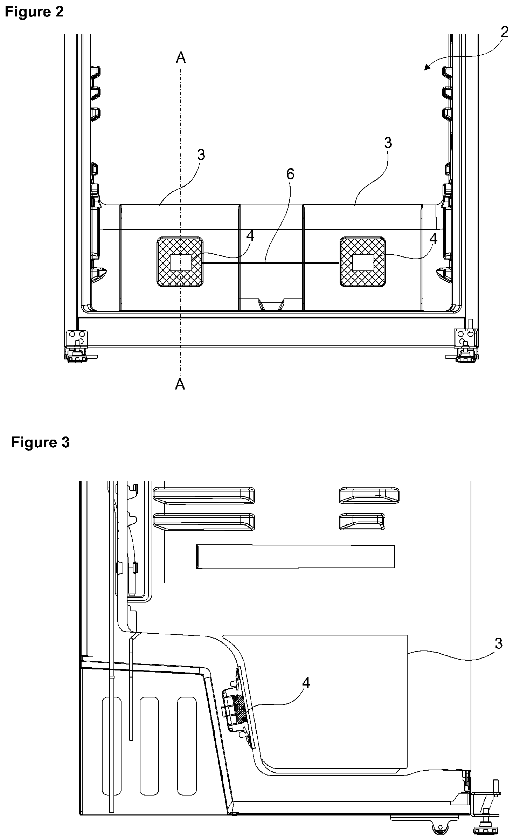

In another embodiment of the present invention, the refrigerator (1) comprises the synchronization unit (5) having a communication line (6) providing the instantaneous PWM signal duty cycle of an illumination unit (4) to be transmitted to another illumination unit (4) in the frequency ranges predetermined by the producer, and updates the PWM signal duty cycle of the other illumination unit (4) with respect to the PWM signal duty cycle of the illumination unit (4) transmitted by means of the communication line (6) (Figure 2).

The same software is run in the microprocessor that the illumination units (4) have, that illuminate the different one from another compartments (3). The software of the said microprocessor relays the information to the medium about the running current step of the software in the frequency f predetermined by the producer. In other words, the duty cycles of the PWM signal applied to the illumination unit (4) is spread to the medium by the software in the f frequency. The illumination units (4) that are intended to emit color simultaneously are connected to each other by a communication line (6). The communication line (6) conveys the data spread to the medium from one illumination unit (4) to another illumination unit (4). Information is spread to the medium by whichever of the illumination units (4) connected to each other by the communication line (6) is at the f frequency at that moment. If all the illumination units (4) connected to each other spread information to the medium simultaneously, this shows that all the illumination units (4) are at the same f frequency. In this situation, the duty cycles of the PWM signal applied to all the illumination units (4) become equal to each other and hence all the illumination units (4) emit the same color light and the same color radiation is observed in all the compartments (3). Otherwise, if one of the illumination units (4) connected to each other by the communication line (6) spreads information to the medium and another illumination unit (4) does not spread information to the medium, this situation shows that the illumination units (4) are in different frequencies at that moment. In other words, the illumination unit (4) spreading information to the medium is at f frequency and the other illumination unit (4) is in a frequency value different from the f frequency. In such a situation, duty cycles of the illumination unit (4) that is at f frequency and spreading the PWM signal duty cycles applied thereon to the medium are conveyed to the other illumination unit (4) whereto it is connected by the communication line (6). The synchronization unit (5) updates the PWM duty cycles applied to the illumination unit (4) which is not at the f frequency at that moment so as to be equal to the PWM signal duty cycles transmitted by the communication line (6). Consequently, the illumination units (4) connected to each other by the communication line (6) emit the same color light simultaneously.

In the refrigerator (1) of the present invention, a more esthetic appearance is attained inside the body (2) by providing the illumination units (4) illuminating different compartments (3) to emit the same color light simultaneously.

It is to be understood that the present invention is not limited to the embodiments disclosed above and a person skilled in the art can easily introduce different embodiments within the scope of the claims of the present invention.

## Claims

1. A refrigerator (1) comprising a body (2), more than one compartment (3) disposed inside the body (2), wherein fruits and vegetables are placed and more than one illumination unit (4) that illuminates the inside of the compartment (3), having a power source and at least one LED having three different ends that can emit light in three different colors being red, green and blue when fed by the power source,
**characterized by**
- a microprocessor that provides the light having continuously changing wavelength to be emitted by controlling the application of the PWM signal having different duty cycles to the ends of the LED such that a certain range of the light spectrum is scanned, and
- a synchronization unit (5) that provides the illumination units (4) illuminating the different one from another compartments (3) to emit light in the same wavelength simultaneously.

2. A refrigerator (1) as in Claim 1 wherein the synchronization unit (5) that controls the PWM signal duty cycle of each illumination unit (4) when the number of zero points counted by the microprocessor of the more than one different one from another illumination unit (4) that is fed with the same mains voltage in sinusoidal wave form is equal to the number of zero points predetermined by the producer and updates the PWM duty cycles so as to be equal to the duty cycle predetermined by the producer when these duty cycles are not equal to the duty cycle predetermined by the producer.

3. A refrigerator (1) as in Claim 1 wherein the synchronization unit (5) that has a communication line (6) providing the instantaneous PWM signal duty cycle of an illumination unit (4) to be transmitted to another illumination unit (4) in the frequency ranges predetermined by the producer, and that updates the PWM signal duty cycle of the other illumination unit (4) with respect to the PWM signal duty cycle of the illumination unit (4) transmitted by means of the communication line (6).

## Patentansprüche

1. Kühlschrank (1) umfassend einen Körper (2), mehr als einem Kühlfach (3) angeordnet innerhalb eines Körpers (2), wobei Obst und Gemüse platziert sind und mehr als eine Beleuchtungseinheit (4), die das Innere des Kühlfachs (3) beleuchtet, eine Stromquelle und mindestens eine LED mit drei verschiedenen Enden aufweist, die das Licht in drei verschiedenen Farben emittieren können, die rot, grün und blau sind, wenn sie von der Stromquelle gespeist werden,
**gekennzeichnet durch**
- einen Mikroprozessor, der das Licht mit dauerhaft ändernder Wellenlänge vorsieht, um durch die Steuerung der Durchführung des PWM-Signals mit verschiedenen Arbeitszyklen an die Enden der LED derart emittiert zu werden, dass ein bestimmter Bereich des Lichtspektrums abgetastet wird, und
- eine Synchronisationseinheit (5), die die Beleuchtungseinheiten (4) zur Verfügung stellt, die die voneinander verschiedenen Kühlfächern (3) beleuchten, um gleichzeitig Licht mit der gleichen Wellenlänge zu emittieren.

2. Kühlschrank (1) nach Anspruch 1, wobei die Synchronisationseinheit (5), die den PWM-signal-Arbeitzyklus jeder Beleuchtungseinheit (4) steuert, wenn die Anzahl der Nullpunkte vom Mikroprozessor von mehr als einer anderen Beleuchtungseinheit (4) gezählt wird, die mit derselben Netzspannung in Form einer Sinuskurve gespeist wird, gleich der Anzahl der vom Hersteller vorgegebenen Nullpunkte ist und PWM-Arbeitszyklen so aktualisiert, dass sie gleich dem vom Hersteller vorgegebenen Arbeitszyklus sind, wenn diese Arbeitszyklen nicht gleich dem vom Hersteller vorgegebenen Arbeitszyklus sind.

3. Kühlschrank (1) nach Anspruch 1, wobei die Synchronisationseinheit (5), die eine Kommunikationsleitung (6) aufweist, die das momentane PWM-Signal-Arbietszyklus einer Beleuchtungseinheit (4) in den vom Hersteller vorgegebenen Frequenzbereichen an eine andere Beleuchtungseinheit (4) übermittelt und das PWM-Arbeitszyklus der anderen Beleuchtungseinheit (4) bezüglich des PWM-Arbeitszyklus der Beleuchtungseinheit (4), übertragen mittels der Kommunikationsleitung (6), aktualisiert.

## Revendications

1. Réfrigérateur (1) comprenant un corps (2), plus d'un compartiment (3) disposé à l'intérieur du corps (2), dans lequel des fruits et légumes sont placés et plus d'une unité d'illumination (4) qui illumine l'intérieur du compartiment (3), ayant une source d'énergie et au moins une DEL ayant trois extrémités différentes pouvant émettre de la lumière dans trois couleurs différentes étant rouge, vert et bleu lorsqu'il est alimenté par la source d'alimentation, **caractérisé par**
- un microprocesseur qui fournit la lumière ayant une longueur d'onde à changement continu devant être émise en contrôlant l'application du signal PWM ayant différents cycles de fonctionnement aux extrémités de la DEL de sorte qu'une certaine plage du spectre de lumière est balayée, et
- une unité de synchronisation (5) qui fournit les unités d'illumination (4) éclairant la différente d'un autre compartiment (3) pour émettre de la lumière dans la même longueur d'onde simultanément.

2. Réfrigérateur (1) selon la revendication 1, dans lequel l'unité de synchronisation (5) qui commande le cycle de service du signal PWM de chaque unité d'illumination (4) lorsque le nombre de points zéro comptés par le microprocesseur du plus d'un différent d'une autre unité d'illumination (4) qui est alimentée avec la même tension de réseau sous forme d'onde sinusoïdale est égale au nombre de points zéro prédéterminé par le producteur et met à jour les cycles de service PWM de manière à être égal au cycle de service prédéterminé par le producteur les cycles ne sont pas égaux au cycle de service prédéterminé par le producteur.

3. Réfrigérateur (1) selon la revendication 1, dans lequel l'unité de synchronisation (5) comporte une ligne de communication (6) fournissant le cycle de service de signal PWM instantané d'une unité d'illumination (4) à transmettre à une autre unité d'illumination (4) plages de fréquences prédéterminées par le producteur, et qui met à jour le cycle de service du signal PWM de l'autre unité d'illumination (4) par rapport au cycle de service du signal PWM de l'unité d'illumination (4) transmise au moyen de la ligne de communication (6).
